Europäisches Patentamt

European Patent Office

Office européen des brevets

(19)

(11) **EP 0 606 268 B1**

(12) **FASCICULE DE BREVET EUROPEEN**

(45) Date de publication et mention
de la délivrance du brevet:
**27.12.1996 Bulletin 1996/52**

(21) Numéro de dépôt: **92919553.5**

(22) Date de dépôt: **18.09.1992**

(51) Int. Cl.$^6$: **B01D 53/56**

(86) Numéro de dépôt international:
**PCT/EP92/02172**

(87) Numéro de publication internationale:
**WO 93/06915 (15.04.1993 Gazette 1993/10)**

(54) **PROCEDE POUR EPURER UN GAZ CONTENANT DE L'OXYDE NITRIQUE ET DU DIOXYDE DE SOUFRE**

Verfahren zum Reinigen von einem Stickstoffoxid- und Schwefeldioxid-enthaltenden Gas.
METHOD FOR PURIFYING NITRIC OXIDE AND SULPHUR DIOXIDE CONTAINING GAS

(84) Etats contractants désignés:
**AT BE CH DE DK ES FR GB GR IE IT LI LU NL SE**

(30) Priorité: **30.09.1991 FR 9112097**

(43) Date de publication de la demande:
**20.07.1994 Bulletin 1994/29**

(73) Titulaire: **SOLVAY (Société Anonyme)**
**B-1050 Bruxelles (BE)**

(72) Inventeur: **DE SOETE, Gérard**
**F-92700 Colombes (FR)**

(74) Mandataire: **Anthoine, Paul et al**
**SOLVAY**
**Département de la Propriété Industrielle**
**310, rue de Ransbeek**
**1120 Bruxelles (BE)**

(56) Documents cités:
**EP-A- 0 077 170**   **EP-A- 0 301 272**
**GB-A- 1 166 704**   **US-A- 5 002 741**

## Description

L'invention concerne l'épuration des gaz en impuretés toxiques, notamment l'épuration des fumées d'installations thermiques, préalablement à leur rejet dans l'atmosphère.

Elle concerne plus particulièrement un procédé pour épurer un gaz en oxydes d'azote, plus spécialement en oxyde nitrique (NO).

Les combustibles d'origine fossile (charbon, coke, pétrole, dérivés du pétrole) contiennent habituellement du soufre ou des composés soufrés, ainsi que des composés azotés. Les fumées générées par leur combustion à l'air ou en présence d'oxygène sont dès lors habituellement contaminées par du dioxyde de soufre et des oxydes d'azote. Dans ces fumées, la majeure partie des oxydes d'azote est de l'oxyde nitrique (NO), le solde étant constitué principalement par du peroxyde d'azote ($NO_2$).

La grande toxicité de l'oxyde nitrique et du peroxyde d'azote implique de les éliminer des fumées avant de rejeter celles-ci dans l'atmosphère.

Dans le brevet US-A-4839147 (Waagner Biro AG), on propose un procédé d'épuration d'une fumée en oxydes d'azote, selon lequel on introduit du sulfite de métal alcalin et du gaz ammoniac dans la fumée, de manière à réduire les oxydes d'azote en oxyde nitreux ($N_2O$) qui est ensuite réduit en azote par l'ammoniac. Dans le cas d'une fumée contenant simultanément des oxydes d'azote et du dioxyde de soufre, le sulfite de métal alcalin est formé in situ dans la fumée en introduisant dans celle-ci du carbonate ou du bicarbonate de métal alcalin.

Ce procédé connu présente l'inconvénient de nécessiter la mise en oeuvre de plusieurs réactifs, parmi lesquels un réactif gazeux (ammoniac) dont le caractère toxique implique des mesures de sécurité importantes.

Dans la demande internationale de brevet WO 86/06711, on décrit un procédé en deux étapes pour épurer un gaz contenant du dioxyde de soufre, de l'oxyde nitrique et du peroxyde d'azote. Dans une première étape, on introduit dans le gaz à épurer, maintenu à haute température (supérieure à 800 °F ou 700 K), un mélange d'oxygène et d'un hydrocarbure, de manière à oxyder l'oxyde nitrique en peroxyde d'azote par l'intermédiaire d'ions peroxyle; dans une seconde étape, on traite le gaz recueilli de la première étape avec du bicarbonate de sodium pour en éliminer le dioxyde de soufre et le peroxyde d'azote en formant du sulfite de sodium, du sulfate de sodium, du nitrate de sodium et de l'azote.

Ce procédé connu présente l'inconvénient de nécessiter plusieurs réactifs (oxygène, hydrocarbure, bicarbonate de sodium). Il présente l'inconvénient supplémentaire d'imposer une installation complexe pour l'injection d'un mélange d'oxygène et d'hydrocarbure dans un gaz à haute température (supérieure à 700 K).

L'invention remédie aux inconvénients des procédés connus décrits plus haut, en fournissant un procédé nouveau qui permet de réaliser une épuration efficace d'un gaz en oxyde nitrique au moyen de bicarbonate de métal alcalin, sans nécessiter de réactif supplémentaire coûteux ou dangereux, et qui peut par ailleurs être mis en oeuvre à température modérée.

On connait par EP-A-0 301 272 un procédé d'épuration d'un gaz contenant, notemment, de l'oxyde nitrique et du dioxyde de soufre, selon lequel on traite le gaz avec le bicarbonate de métal alcalin à une température entre 30 et 130 °C (303 et 403 K). Le gaz à épurer contient au moins 2% en volume d'oxygène.

En conséquence, l'invention concerne un procédé pour épurer en oxyde nitrique un gaz contenant de l'oxyde nitrique et du dioxyde de soufre au moyen de bicarbonate de métal alcalin selon la revendication 1, les revendications 2 à 15 définissant des modes de réalisation preférés.

L'invention s'applique à tous les gaz contenant simultanément de l'oxyde nitrique (NO) et du dioxyde de soufre ($SO_2$). Elle s'applique spécialement aux gaz générés par la combustion de matières combustibles en présence d'air ou d'oxygène. Par la suite, un gaz provenant de la combustion d'une matière combustible sera dénommé "fumée". Dans le cas où l'invention est appliquée à une fumée, la matière combustible n'est pas critique et peut être indifféremment un gaz, un liquide ou un solide. Elle peut comprendre un combustible d'origine fossile (tel que le gaz naturel, le pétrole et ses dérivés, le charbon et le coke), de la biomasse ou des substances organiques ou inorganiques inflammables provenant par exemple de déchets ménagers ou municipaux. L'origine de la fumée n'est pas critique non plus, celle-ci pouvant par exemple provenir d'une centrale thermique de production d'électricité, d'une installation centralisée de chauffage urbain ou d'une installation d'incinération d'ordures ménagères ou municipales.

Le gaz traité dans le procédé selon l'invention contient nécessairement du dioxyde de soufre et de l'oxyde nitrique (NO). Il peut contenir d'autres oxydes d'azote en plus de l'onde nitrique, par exemple de l'oxyde nitreux ($N_2O$), du trioxyde d'azote ($N_2O_3$), du pentoxyde d'azote ($N_2O_5$) et du peroxyde d'azote ($NO_2$). Par la suite, les oxydes d'azote du gaz seront désignés dans leur ensemble par la notation $NO_x$. En règle générale, la fraction volumique d'oxyde nitrique (NO) parmi l'ensemble des oxydes d'azote ($NO_x$) du gaz est d'au moins 50 % et généralement supérieure à 75 %; elle peut être de 100 %. En variante, le gaz peut contenir d'autres composés.

L'oxyde nitrique est oxydé en peroxyde d'azote selon la réaction :

$$2 \, NO + O_2 \rightarrow 2 \, NO_2$$

Néanmoins, dans le procédé selon l'invention, l'oxygène n'a pas pour fonction essentielle d'oxyder l'oxyde nitrique en peroxyde d'azote et il coexiste dès lors avec l'oxyde nitrique dans le gaz. Selon l'invention, le rapport molaire $O_2/NO$ dans le gaz doit dès lors être au moins égal à 1. En pratique, il s'est avéré souhaitable de réaliser dans le gaz un rapport molaire $O_2/NO$ supérieur à 1 et de préférence au moins égal à 2, les valeurs supérieures à 2,5 étant recommandées. Bien que le procédé selon l'invention n'impose pas de limite supérieure à la teneur en oxygène du gaz, il n'y a pas intérêt à dépasser un rapport molaire $O_2/NO$ égal à 100, afin de ne pas exagérer inutilement le volume du gaz à traiter. Les valeurs supérieures à 3,5 conviennent généralement bien, celles supérieures à 5 étant préférées. L'oxygène peut être mis en oeuvre à l'état pur ou, plus simplement à l'état d'air ambiant. Dans le cas où le gaz traité est une fumée, l'oxygène peut être apporté par un excès d'air envoyé dans le foyer où on effectue la combustion du combustible; on peut aussi introduire de l'air dans la fumée en aval du foyer.

Bien que ne souhaitant pas être lié par une explication théorique, l'inventeur pense que l'épuration du gaz en oxyde nitrique et en peroxyde d'azote par le bicarbonate de métal alcalin se fait via la formation intermédiaire de pyrosulfite de métal alcalin, selon les réactions suivantes dans lesquelles M désigne un métal alcalin :

$$2\ MHCO_3 + 2\ SO_2 \rightarrow M_2S_2O_5 + H_2O + 2\ CO_2$$

$$M_2S_2O_5 + 2\ NO_2 \rightarrow MNO_2 + MNO_3 + 2\ SO_2$$

$$M_2S_2O_5 + 2\ NO + O_2 \rightarrow MNO_2 + MNO_3 + 2\ SO_2$$

La quantité de dioxyde de soufre dans le gaz doit dès lors être au moins égale à la quantité théorique nécessaire pour former, par réaction avec le bicarbonate de métal alcalin, une quantité suffisante de pyrosulfite de métal alcalin pour consommer la totalité de l'oxyde nitrique et du peroxyde d'azote du gaz et former du nitrite et du nitrate de métal alcalin selon les réactions précitées. En règle générale, il est dès lors nécessaire d'avoir en présence, dans le gaz, des quantités (exprimées en moles) égales de dioxyde de soufre, d'oxydes d'azote $NO_x$ et de bicarbonate de métal alcalin. On observe cependant qu'une fois le procédé démarré, il libère une quantité de dioxyde de soufre égale à celle qu'il consomme. En pratique, il s'est révélé souhaitable de réaliser, dans le gaz soumis à l'épuration, un rapport molaire $SO_2/NO$ supérieur à 0,2 et de préférence au moins égal à 0,5. Bien que le procédé n'impose pas de limite supérieure à la teneur en dioxyde de soufre, il n'y a pas intérêt à dépasser un rapport molaire $SO_2/NO$ égal à 3, afin de ne pas exagérer inutilement le volume de la fumée à traiter. Un rapport molaire $SO_2/NO$ compris entre 1 et 2 s'est révélé spécialement avantageux.

En pratique, l'expérience montre que, pour avoir une épuration efficace en oxydes d'azote $NO_x$, il est souhaitable de réaliser dans le gaz soumis à l'épuration, une concentration volumique d'oxygène au moins égale à 0,06 % et de préférence supérieure à 0,1 % et une concentration volumique de dioxyde de soufre au moins égale à 100 ppm (parties par million) et de préférence supérieure à 200 ppm. Les concentrations volumiques supérieures à 0,15 % d'oxygène et à 350 ppm de dioxyde de soufre dans le gaz conviennent bien, celles au moins égales à 0,25 % d'oxygène et à 500 ppm de dioxyde de soufre étant spécialement avantageuses. Il s'est généralement révélé inutile de dépasser des concentrations volumiques de 750 ppm de dioxyde de soufre dans le gaz, les valeurs comprises entre 600 et 750 ppm de dioxyde de soufre étant dès lors satisfaisantes. Pour ce qui concerne l'oxygène, on peut mettre des quantités importantes, sans que cela ne nuise à la bonne marche du procédé. Le plus souvent, la concentration volumique d'oxygène dans le gaz ne dépasse pas 10 %.

Le bicarbonate de métal alcalin doit être mis en oeuvre en une quantité supérieure à 0,5 mole, de préférence au moins égale à 0,8 mole, par mole d'oxyde nitrique du gaz à épurer. Dans le cas où le gaz à épurer contient de l'oxyde nitrique et du peroxyde d'azote, le bicarbonate de métal alcalin doit être mis en oeuvre en une quantité supérieure à 0,5 mole, de préférence au moins égale à 0,8 mole, par mole d'oxyde nitrique et de peroxyde d'azote du gaz. En principe, il n'y a pas de limite supérieure imposée à la quantité de bicarbonate de métal alcalin utilisée. En pratique, pour des considérations économiques, on n'a pas intérêt à dépasser 100 moles (de préférence 10 moles) de bicarbonate de métal alcalin par mole d'oxyde d'azote ($NO_x$) du gaz à épurer, les valeurs situées entre 0,8 et 5 moles étant spécialement recommandées, celles situées entre 1 et 3 moles étant les plus avantageuses.

Dans l'exécution du procédé selon l'invention, la température doit être comprise entre 400 et 700 K. les températures situées entre 400 et 500 K sont spécialement avantageuses.

Dans le procédé selon l'invention, le traitement du gaz avec le bicarbonate de métal alcalin peut être opéré par voie humide ou par voie sèche. Dans le traitement par la voie humide, le gaz est lavé avec une solution ou une suspension aqueuse de bicarbonate de métal alcalin. Dans le traitement par la voie sèche, qui est préféré, le bicarbonate de métal alcalin est mis en oeuvre à l'état solide dans le gaz, en l'absence de liquide, en particulier d'eau. Dans le traitement par la voie sèche, diverses méthodes opératoires peuvent être utilisées. Selon une première méthode opératoire, le bicarbonate de métal alcalin est injecté à l'état d'une poudre dans le gaz, à l'intérieur d'une chambre de réaction. Selon une seconde méthode opératoire, on fait circuler le gaz dans un lit fixe, un lit mobile ou un lit fluidisé de particules de bicarbonate de métal alcalin. Ces méthodes opératoires sont bien connues dans la technique du génie chimique. Dans celles-ci, on a intérêt à utiliser une poudre de granulométrie régulière et la plus fine possible, de manière à accélérer la réaction du bicarbonate de métal alcalin avec le dioxyde de soufre et les oxydes d'azote du gaz. En règle générale, on recommande d'utiliser une poudre dont le diamètre moyen des particules est inférieur à 250 $\mu$m. La granulométrie préférée corres-

pond à un diamètre moyen des particules n'excédant pas 200 µm, par exemple compris entre 5 et 150 µm.

Dans le procédé selon l'invention, le bicarbonate de métal alcalin peut par exemple être du bicarbonate de sodium, du bicarbonate de potassium, du bicarbonate de césium ou leurs mélanges. Le bicarbonate de sodium est préféré.

Le procédé selon l'invention conduit à la formation d'un résidu solide comprenant du nitrite de métal alcalin, du nitrate de métal alcalin et éventuellement du sulfate de métal alcalin. Ce résidu peut être facilement éliminé en traitant le gaz dans un dispositif de dépoussiérage adéquat qui peut par exemple comprendre un filtre électrostatique. Dans le cas d'un traitement par voie sèche selon la définition qui en a été donnée plus haut, on peut utiliser un filtre à tissus filtrants (filtre à manches) dont l'efficacité est optimum.

Le procédé selon l'invention s'applique à l'épuration de tous gaz contenant des oxydes d'azote $NO_x$ et du dioxyde de soufre. Il trouve une application intéressante dans l'épuration des fumées provenant de l'incinération d'ordures ménagères ou municipales, ainsi que dans l'épuration des fumées émises par la combustion de combustibles soufrés d'origine fossile tels que le charbon et les dérivés du pétrole. Il s'applique en particulier à l'épuration des fumées provenant des centrales thermiques de production d'électricité.

Les exemples suivants servent à illustrer l'invention. Ils sont explicités en référence aux dessins annexés.

Les figures 1, 2 et 3 sont trois diagrammes fournissant la composition de gaz contenant des oxydes d'azote ($NO_x$) et du dioxyde de soufre.

Les figures 4 et 5 sont deux diagrammes montrant respectivement l'influence des concentrations en oxygène et en dioxyde de soufre sur le taux d'épuration du gaz en oxyde nitrique.

Première série d'exemples.

Les exemples 1 à 3 dont la description suit sont conformes à l'invention et concernent le traitement d'un gaz contenant de l'argon, de l'oxyde nitrique et du dioxyde de soufre avec du bicarbonate de métal alcalin.

Exemple 1.

On a préparé un gaz synthétique constitué pour l'essentiel d'argon, d'oxyde nitrique, de dioxyde de soufre et d'oxygène et présentant la composition volumique suivante :

| NO | 412 µl/l de gaz, |
|----|----|
| SO₂ | 675 µl/l de gaz, |
| O₂ | 22.940 µl/l de gaz. |

On a par ailleurs préparé un lit de 6 g de particules de bicarbonate de sodium reposant sur une grille horizontale. On a utilisé, pour le lit, des particules de bicarbonate de sodium présentant un diamètre moyen de 100 µm environ. On a soumis le gaz à un déplacement ascendant uniforme à travers le lit, à une vitesse réglée pour le fluidiser.

On a fait monter la température dans le lit graduellement de 300 K à 700 K.

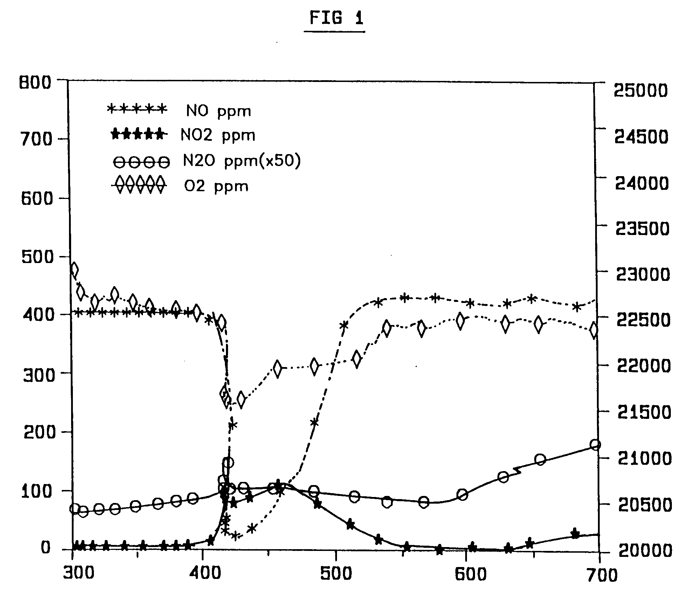

Les résultats de l'essai sont reproduits sur le diagramme de la figure 1, dont l'échelle des abscisses représente la température du gaz à l'entrée du lit (exprimée en degrés Kelvin), l'échelle des ordonnées de gauche représente la concentration volumique de chacun des constituants NO, $NO_2$ et $N_2O$ du gaz à la sortie du lit (ces concentrations étant exprimées en ppm ou µl du constituant par l du gaz et devant être divisées par 50 dans le cas du $N_2O$) et l'échelle des ordonnées de droite représente la concentration volumique d'oxygène dans le gaz à la sortie du lit (exprimée en ppm ou µl d'oxygène par l de gaz).

On observe que le gaz a subi une épuration optimum aux températures situées entre environ 400 et 450 K. A la température d'environ 420 K, le gaz à la sortie du lit a présenté la composition approximative suivante :

| NO | 20 µl/l; |
|----|----|
| NO₂ | 70 µl/l; |
| N₂O | 2 µl/l; |
| O₂ | 21.500 µl/l. |

Exemple 2.

On a répété l'essai de l'exemple 1 en utilisant cette fois un lit de bicarbonate de potassium. Le gaz introduit dans le lit était constitué d'un mélange d'argon, d'oxyde nitrique, de dioxyde de soufre et d'oxygène, présentant la composition suivante :

| NO | 415 µl/l de gaz, |
|----|----|
| SO₂ | 675 µl/l de gaz, |
| O₂ | 22.907 µl/l de gaz. |

On a fait monter la température dans le lit graduellement de 300 K à 800 K.

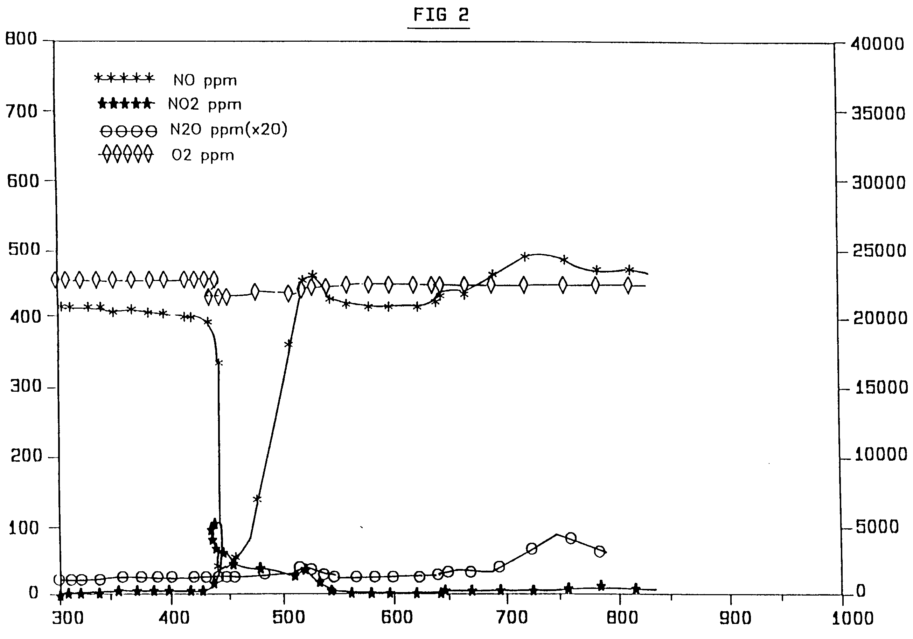

Les résultats de l'essai sont reproduits sur le diagramme de la figure 2, dont l'échelle des abscisses représente la température du gaz à l'entrée du lit (exprimée en degrés Kelvin), l'échelle des ordonnées de gauche représente la concentration volumique de chacun

des constituants NO, NO$_2$ et N$_2$O du gaz à la sortie du lit (ces concentrations volumiques étant exprimées en ppm ou $\mu$l du constituant par l du gaz et devant être divisées par 20 dans le cas du N$_2$O) et l'échelle des ordonnées de droite représente la concentration volumique d'oxygène dans le gaz à la sortie du lit (exprimée en ppm ou $\mu$l d'oxygène par l de gaz).

On observe que le gaz a subi une épuration optimum aux températures situées entre environ 400 et 500 K.

Exemple 3.

On a répété l'essai de l'exemple 1 en utilisant cette fois un lit de bicarbonate de césium. Le gaz introduit dans le lit était constitué d'un mélange d'argon, d'oxyde nitrique, de dioxyde de soufre et d'oxygène, présentant la composition suivante :

| NO | 410 $\mu$l/l de gaz, |
|-----|----------------------|
| SO$_2$ | 675 $\mu$l/l de gaz, |
| O$_2$ | 22.871 $\mu$l/l de gaz. |

On a fait monter la température dans le lit graduellement de 300 K à 700 K.

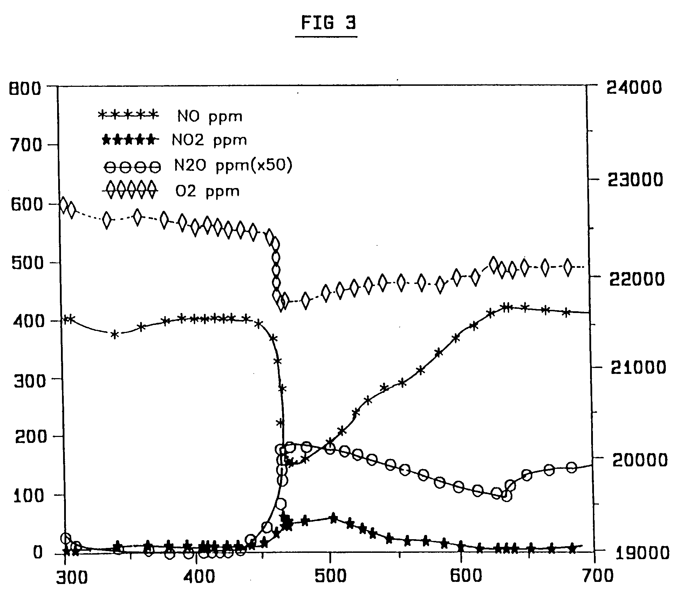

Les résultats de l' essai sont reproduits sur le diagramme de la figure 3, dont l'échelle des abscisses représente la température du gaz à l'entrée du lit (exprimée en degrés Kelvin), l'échelle des ordonnées de gauche représente la concentration volumique de chacun des constituants NO, NO$_2$ et N$_2$O du gaz à la sortie du lit (ces concentrations volumiques étant exprimées en ppm ou $\mu$l du constituant par l du gaz et devant être divisées par 50 dans le cas du N$_2$O) et l'échelle des ordonnées de droite représente la concentration volumique d'oxygène dans le gaz à la sortie du lit (exprimée en ppm ou $\mu$l d'oxygène par l de gaz).

On observe que le gaz a subi une épuration optimum aux températures situées entre environ 450 et 500 K. A la température d'environ 475 K, le gaz à la sortie du lit a présenté la composition approximative suivante :

| NO | 150 $\mu$l/l; |
|-----|--------------|
| NO$_2$ | 50 $\mu$l/l; |
| N$_2$O | 3 $\mu$l/l; |
| O$_2$ | 21.700 $\mu$l/l. |

Seconde série d'exemples.

Les exemples 4 et 5 suivants servent à montrer l'influence des concentrations respectives en oxygène et en dioxyde de soufre dans le gaz à épurer.

Exemple 4.

On a répété l'essai de l'exemple 1 avec un gaz synthétique constitué pour l'essentiel d'argon, d'oxyde nitrique (410 $\mu$l/l), de dioxyde de soufre (675 $\mu$l/l) et différentes concentrations en oxygène.

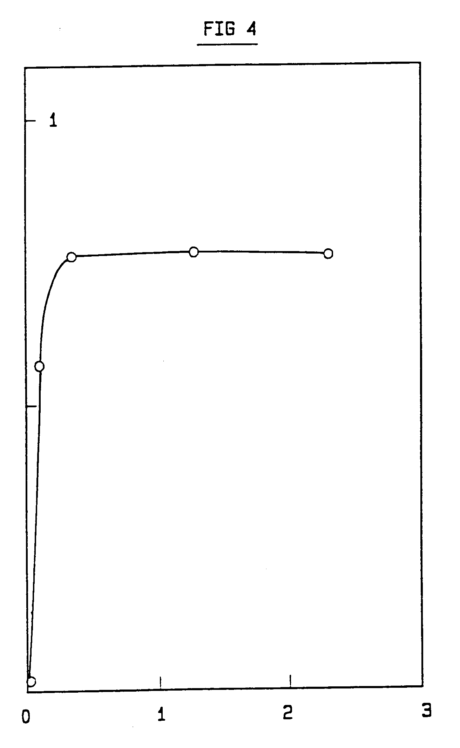

On a procédé à quatre essais avec quatre concentrations volumiques différentes d'oxygène. Dans chaque essai, on a fait circuler le gaz à travers un lit fluidisé de 6 g de bicarbonate de sodium comme dans le cas de l'exemple 1 et on a mesuré le taux d'élimination des oxydes d'azote NO$_x$ du gaz. Les résultats obtenus sont reproduits sur le diagramme de la figure 4, dans lequel l'échelle des abscisses représente la concentration volumique (en %) de l'oxygène dans le gaz à l'entrée du lit et l'échelle des ordonnées exprime la fraction volumique d'oxydes d'azote (NO$_x$) éliminée du gaz à l'issue de l'essai. Le diagramme montre que l'épuration du gaz en oxydes d'azote est optimum dès que la concentration volumique d'oxygène dans le gaz excède environ 0,2 %. Des concentrations de 0,3 à 0,4 sont dès lors déjà suffisantes pour une bonne épuration. On constate donc qu'on obtient déjà une bonne épuration du gaz en oxydes d'azote pour des rapports molaire O$_2$/NO d'environ 7.

Exemple 5.

On a répété l'essai de l'exemple 1 avec un gaz synthétique constitué pour l'essentiel d'argon, d'oxyde nitrique (410 $\mu$l/l), d'oxygène et de dioxyde de soufre et on a fait varier la teneur en dioxyde de soufre tout en maintenant la concentration volumique de l'oxygène dans le gaz à environ 2,3 %.

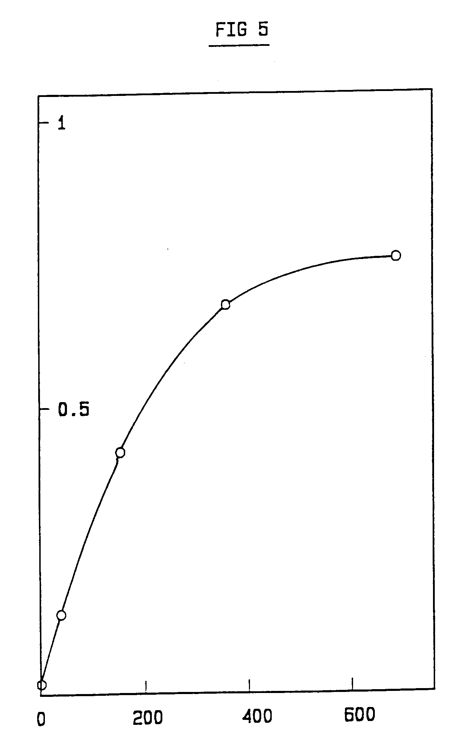

On a procédé à cinq essais avec cinq concentrations volumiques différentes de dioxyde de soufre. Dans chaque essai, on a fait circuler le gaz à travers un lit fluidisé de 6 g de bicarbonate de sodium code dans le cas de l'exemple 1 et on mesuré le taux d'élimination des oxydes d'azote (NO$_x$) du gaz. Les résultats obtenus sont reproduits sur le diagramme de la figure 5, dans lequel l'échelle des abscisses représente la concentration volumique (en ppm) du dioxyde de soufre dans le gaz à l'entrée du lit et l'échelle des ordonnées exprime la fraction volumique d'oxydes d'azote éliminée du gaz à l'issue de l'essai. Le diagramme montre que l'épuration du gaz en oxydes d'azote croît avec la concentration du gaz en dioxyde de soufre et tend vers une valeur constante optimum lorsque la concentration volumique de dioxyde de soufre dans le gaz est au moins égale à 600 ppm.

**Revendications**

1. Procédé pour épurer en oxyde nitrique un gaz contenant de l'oxyde nitrique et du dioxyde de soufre, selon lequel on traite le gaz avec du bicarbonate de métal alcalin et selon lequel on met en oeuvre de l'oxygène dans le gaz, caractérisé en ce qu'on règle les concentrations respectives en oxygène et en dioxyde de soufre dans le gaz de manière à y réaliser des rapports molaires $O_2$:NO au moins égal à 1 et $SO_2$:NO supérieur à 0,2 et on règle la température du gaz entre 400 et 700 K.

2. Procédé selon la revendication 1, caractérisé en ce qu'on met en oeuvre dans le gaz un rapport molaire $O_2$:NO au moins égal à 2.

3. Procédé selon la revendication 2, caractérisé en ce qu'on met en oeuvre dans le gaz un rapport molaire $O_2$:NO supérieur à 5.

4. Procédé selon l'une quelconque des revendications 1 à 3, caractérisé en ce qu'on met en oeuvre dans le gaz un rapport molaire $SO_2$:NO au moins égal à 0,5.

5. Procédé selon l'une quelconque des revendications 1 à 4, caractérisé en ce qu'on met en oeuvre une quantité de dioxyde de soufre dans le gaz au moins égale à la quantité théorique nécessaire pour former, par réaction avec le bicarbonate de métal alcalin, une quantité suffisante de pyrosulfite de métal alcalin pour consommer la totalité de l'oxyde nitrique et du peroxyde d'azote du gaz.

6. Procédé selon la revendication 5, caractérisé en ce qu'on met en oeuvre dans le gaz un rapport molaire $SO_2$:NO compris entre 1 et 2.

7. Procédé selon l'une quelconque des revendications 1 à 6, caractérisé en ce qu'on réalise dans le gaz une concentration volumique d'oxygène au moins égale à 0,06 % et une concentration volumique de dioxyde de soufre au moins égale à 100 ppm.

8. Procédé selon la revendication 7, caractérisé en ce qu'on réalise dans le gaz une concentration volumique d'oxygène au moins égale à 0,25 % et une concentration volumique de dioxyde de soufre au moins égale à 500 ppm.

9. Procédé selon l'une quelconque des revendications 1 à 8, caractérisé en ce qu'on met en oeuvre plus de 0,5 mole de bicarbonate de métal alcalin par mole d'oxyde nitrique du gaz.

10. Procédé selon la revendication 9, caractérisé en ce qu'on met en oeuvre de 0,8 à 5 moles de bicarbonate de métal alcalin par mole d'oxyde nitrique du gaz.

11. Procédé selon l'une quelconque des revendications 1 à 10, caractérisé en ce que le traitement du gaz avec le bicarbonate de métal alcalin est exécuté à une température comprise entre 400 et 500 K.

12. Procédé selon l'une quelconque des revendications 1 à 11, caractérisé en ce le traitement du gaz avec le bicarbonate de métal alcalin est opéré par voie sèche.

13. Procédé selon l'une quelconque des revendications 1 à 12, caractérisé en ce que le bicarbonate de métal alcalin est du bicarbonate de sodium.

14. Procédé selon l'une quelconque des revendications 1 à 13, caractérisé en ce qu'il est appliqué à une fumée provenant d'un combustible soufré d'origine fossile.

15. Procédé selon l'une quelconque des revendications 1 à 14, caractérisé en ce qu'il est appliqué à une fumée provenant de l'incinération d'ordures ménagères ou municipales.

**Claims**

1. Process for cleaning a gas containing nitrogen monoxide and sulphur dioxide to remove nitrogen monoxide, according to which the gas is treated with alkali metal bicarbonate and according to which oxygen is employed in the gas, characterized in that the respective concentrations of oxygen and sulphur dioxide in the gas are regulated in order to bring about therein molar ratios of $O_2$:NO of at least 1 and of $SO_2$:NO of greater than 0.2, and the temperature of the gas is regulated to between 400 and 700 K.

2. Process according to Claim 1, characterized in that a molar ratio of $O_2$:NO of at least 2 is employed in the gas.

3. Process according to Claim 2, characterized in that a molar ratio of $O_2$:NO of greater than 5 is employed in the gas.

4. Process according to any one of Claims 1 to 3, characterized in that a molar ratio of $SO_2$:NO of at least 0.5 is employed in the gas.

5. Process according to any one of Claims 1 to 4, characterized in that a quantity of sulphur dioxide in the gas is employed which is at least equal to the quantity theoretically required to form, by reaction with the alkali metal bicarbonate, a sufficient quantity of alkali metal pyrosulphite to consume all of the nitrogen monoxide and nitrogen dioxide in the gas.

6. Process according to Claim 5, characterized in that a molar ratio of $SO_2$:NO of between 1 and 2 is employed in the gas.

7. Process according to any one of Claims 1 to 6, characterized in that a volume concentration of oxygen of at least 0.06% is brought about within the gas and a volume concentration of sulphur dioxide of at least 100 ppm.

8. Process according to Claim 7, characterized in that a volume concentration of oxygen of at least 0.25% is brought about within the gas and a volume concentration of sulphur dioxide of at least 500 ppm.

9. Process according to any one of Claims 1 to 8, characterized in that more than 0.5 mol of alkali metal bicarbonate is employed per mole of nitrogen monoxide in the gas.

10. Process according to Claim 9, characterized in that from 0.8 to 5 mol of alkali metal bicarbonate are employed per mole of nitrogen monoxide in the gas.

11. Process according to any one of Claims 1 to 10, characterized in that the gas is treated with the alkali metal bicarbonate at a temperature of between 400 and 500 K.

12. Process according to any one of Claims 1 to 11, characterized in that the gas is treated with the alkali metal bicarbonate by a dry route.

13. Process according to any one of Claims 1 to 12, characterized in that the alkali metal bicarbonate is sodium bicarbonate.

14. Process according to any one of Claims 1 to 13, characterized in that it is applied to fumes originating from the combustion of a sulphur-containing fossil fuel.

15. Process according to any one of Claims 1 to 14, characterized in that it is applied to fumes originating from the incineration of household or municipal refuse.

**Patentansprüche**

1. Verfahren zum Reinigen eines Stickstoffoxid- und Schwefaldioxidenthaltenden Gases von Stickstoffoxid, gemäß dem man das Gas mit Alkalimetallbicarbonat behandelt und gemäß dem man in dem Gas Sauerstoff einsetzt, dadurch gekennzeichnet, daß man die jeweiligen Konzentrationen an Sauerstoff und an Schwefeldioxid in dem Gas so einstellt, daß darin Molverhältnisse $O_2$ : NO von wenigstens 1 und $SO_2$ : NO größer als 0,2 hergestellt werden, und man die Temperatur des Gases zwischen 400 und 700 K einstellt.

2. Verfahren gemäß Anspruch 1, dadurch gekennzeichnet, daß man in dem Gas ein Molverhältnis $O_2$ : NO von wenigstens 2 einsetzt.

3. Verfahren gemäß Anspruch 2, dadurch gekennzeichnet, daß man in dem Gas ein Molverhältnis $O_2$ : NO größer als 5 einsetzt.

4. Verfahren gemäß einem der Ansprüche 1 bis 3, dadurch gekennzeichnet, daß man in dem Gas ein Molverhältnis $SO_2$ : NO von wenigstens 0,5 einsetzt.

5. Verfahren gemäß einem der Ansprüche 1 bis 4, dadurch gekennzeichnet, daß man in dem Gas eine Schwefeldioxidmenge einsetzt, die wenigstens gleich der theoretisch notwendigen Menge ist, um durch Reaktion mit dem Alkalimetallbicarbonat eine für den Verbrauch des gesamten Stickstoffoxids und Stickstoffperoxids des Gases ausreichende Menge Alkalimetallpyrosulfit zu bilden.

6. Verfahren gemäß Anspruch 5, dadurch gekennzeichnet, daß man in dem Gas ein Molverhältnis $SO_2$ : NO zwischen 1 und 2 einsetzt.

7. Verfahren gemäß einem der Ansprüche 1 bis 6, dadurch gekennzeichnet, daß man in dem Gas eine Volumenkonzentration an Sauerstoff von wenigstens 0,06% und eine Volumenkonzentration an Schwefeldioxid von wenigstens 100 ppm herstellt.

8. Verfahren gemäß Anspruch 7, dadurch gekennzeichnet, daß man in dem Gas eine Volumenkonzentration an Sauerstoff von wenigstens 0,25% und eine Volumenkonzentration an Schwefeldioxid von wenigstens 500 ppm herstellt.

9. Verfahren gemäß einem der Ansprüche 1 bis 8, dadurch gekennzeichnet, daß man mehr als 0,5 Mol Alkalimetallbicarbonat pro Mol Stickstoffoxid des Gases einsetzt.

10. Verfahren gemäß Anspruch 9, dadurch gekennzeichnet, daß man 0,8 bis 5 Mol Alkalimetallbicarbonat pro Mol Stickstoffoxid des Gases einsetzt.

11. Verfahren gemäß einem der Ansprüche 1 bis 10, dadurch gekennzeichnet, daß die Behandlung des Gases mit dem Alkalimetallbicarbonat bei einer Temperatur zwischen 400 und 500 K ausgeführt wird.

12. Verfahren gemäß einem der Ansprüche 1 bis 11, dadurch gekennzeichnet, daß die Behandlung des Gases mit dem Alkalimetallbicarbonat trocken durchgeführt wird.

13. Verfahren gemäß einem der Ansprüche 1 bis 12, dadurch gekennzeichnet, daß das Alkalimetallbicarbonat Natriumbicarbonat ist.

14. Verfahren gemäß einem der Ansprüche 1 bis 13, dadurch gekennzeichnet, daß es auf ein Rauchgas angewendet wird, das von einem schwefelhaltigen Brennstoff fossilen Ursprungs stammt.

15. Verfahren gemaß einem der Ansprüche 1 bis 14, dadurch gekennzeichnet, daß es auf ein Rauchgas angewendet wird, das aus der Verbrennung von Haus- oder Kommunalmüll stammt.

FIG 1

EP 0 606 268 B1

FIG 2

EP 0 606 268 B1

FIG 3

EP 0 606 268 B1

## FIG 4

## FIG 5